# FASCICULE DE BREVET EUROPEEN

(11) **EP 1 809 573 B1**
(45) Date de publication et mention de la délivrance du brevet: **07.05.2008**
(21) Numéro de dépôt: 04805422.5
(22) Date de dépôt: 09.11.2004
(51) Int. Cl.: C01B 13/11

(54) **GENERATEUR D'OZONE ET ELECTRODE POUR UN TEL GENERATEUR**
OZONGENERATOR UND ELEKTRODE DAFÜR
OZONE GENERATOR AND AN ELECTRODE THEREFOR

(43) Date de publication de la demande: 25.07.2007
(73) Titulaire: DEGREMONT, 92500 Rueil-Malmaison (FR)
(72) Inventeur: LANG, Helmut, V., CH-5430 Wettingen (CH); SUTER, Marcel, CH-8003 Zürich (CH); VEZZU, Guido, CH-8422 Pfungen (CH)
(74) Mandataire: Michardière, Bernard
(86) Numéro de dépôt international: PCT/FR2004/002879
(87) Numéro de publication internationale: WO 2006/051173

(56) Documents cités:
- WO-A-89/00975
- US-A- 4 886 645
- US-A- 5 145 653
- US-B1- 6 217 833

## Description

L'invention est relative à un générateur d'ozone du genre de ceux qui comportent :
- au moins une électrode extérieure tubulaire,
- au moins une électrode intérieure constituée d'une pluralité de segments tubulaires métalliques fermés, au moins partiellement, à chaque extrémité et revêtus extérieurement de céramique, ces segments tubulaires étant disposés les uns derrière les autres, mécaniquement découplés et reliés électriquement,
- des moyens de maintien des segments tubulaires par rapport à l'électrode extérieure pour former un interstice de décharge annulaire,
- une tige traversant axialement les segments tubulaires et munie à ses extrémités de moyens de serrage axial des segments tubulaires les uns contre les autres, pour établir le contact électrique,
- des moyens pour connecter toutes les électrodes à une source de courant alternatif, et
- des moyens pour faire circuler un gaz contenant de l'oxygène dans les interstices.

Un générateur d'ozone de ce type est connu, par exemple d'après le brevet US n°5 145 653. Dans un tel générateur, en appliquant entre les électrodes une tension alternative remplissant certaines conditions limites, des décharges Corona ont lieu dans l'interstice entre la surface du diélectrique formé par le revêtement céramique et l'électrode extérieure. Ces décharges entraînent la production d'ozone. L'utilisation de céramique comme revêtement diélectrique permet d'obtenir des rendements de production d'ozone plus élevés qu'avec un revêtement de verre. En particulier, la teneur en ozone dans le gaz sortant du générateur peut dépasser 12% en masse.

Toutefois, le revêtement céramique est relativement fragile et des fissures peuvent apparaître qui empêchent une bonne répartition des charges électriques en surface, ce qui peut provoquer localement un dépassement de la tension admissible pour la céramique. Il peut en résulter une rupture du revêtement céramique et la mise hors service du générateur.

Les contraintes mécaniques créées par le serrage axial des segments tubulaires revêtus de céramique peuvent également contribuer à l'apparition de fissures dans le revêtement céramique.

L'invention a pour but, surtout, de fournir un générateur d'ozone qui ne présente plus, ou à un degré moindre, les inconvénients rappelés ci-dessus. En particulier, il est souhaitable que la conception du générateur permette une bonne résistance du revêtement céramique aux contraintes mécaniques et électriques de sorte que le risque de fissures du revêtement céramique soit sensiblement réduit, et que le rendement de l'appareil soit amélioré.

Selon l'invention, un générateur d'ozone du genre défini précédemment est caractérisé en ce que chaque segment tubulaire métallique est muni, à chaque extrémité, d'un fond convexe vers l'extérieur, sensiblement en forme de calotte sphérique, comportant une zone centrale pour contact électrique, et que le revêtement de céramique comprend au moins deux couches déposées successivement. L'ensemble présente une résistance améliorée à l'égard des sollicitations mécaniques et électriques.

Les risques de fissuration du revêtement céramique se trouvent sensiblement diminués.

De préférence, l'ensemble est prévu pour que chaque électrode intérieure résiste sans fissuration du revêtement céramique à un couple de serrage au moins double du couple nominal, exercé en bout de tige axiale.

L'épaisseur de chaque couche est de préférence comprise entre 50 et 300 µm.

Chaque couche du revêtement céramique est avantageusement déposée par revêtement de pâte (« slurry coating »), ou revêtement de poudre (« powder coating »), ou pulvérisation plasma (« plasma spraying »).

La surface extérieure des segments tubulaires peut présenter une rugosité, notamment des stries, pour améliorer l'accrochage du revêtement céramique. La profondeur des stries ou aspérités est avantageusement de l'ordre de 0.1mm. En variante, la surface extérieure des segments tubulaires peut être rendue rugueuse par projection de sable.

La zone centrale de chaque fond d'un élément tubulaire comporte un orifice délimité par une collerette cylindrique faisant saillie axialement vers l'extérieur, au-delà du revêtement céramique, par rapport au fond.

De préférence les électrodes extérieures et intérieures et les segments tubulaires sont réalisés en acier inoxydable.

L'invention concerne également une électrode intérieure, pour générateur d'ozone tel que défini précédemment, constituée d'une pluralité de segments tubulaires métalliques fermés, au moins partiellement, à chaque extrémité et revêtus extérieurement de céramique, ces segments tubulaires étant disposés les uns derrière les autres, mécaniquement découplés et reliés électriquement, une tige traversant axialement les segments tubulaires et étant munie à ses extrémités de moyens de serrage axial des segments tubulaires les uns contre les autres, pour établir le contact électrique, caractérisée en ce que chaque segment tubulaire métallique est muni, à chaque extrémité, d'un fond convexe vers l'extérieur, sensiblement en forme de calotte sphérique, comportant une zone centrale pour contact, et que le revêtement de céramique comprend au moins deux couches déposées successivement.

L'invention consiste, mises à part les dispositions exposées ci-dessus, en un certain nombre d'autres dispositions dont il sera plus explicitement question ci-après à propos d'un exemple de réalisation décrit avec référence aux dessins annexés mais qui n'est nullement limitatif. Sur ces dessins :
Fig.1 est une coupe longitudinale verticale schématique d'un générateur d'ozone selon l'invention.
Fig.2 est une coupe verticale vue de gauche suivant la ligne II-II de Fig.1.
Fig.3 est une coupe longitudinale verticale partielle, à plus grande échelle, semblable à Fig.1.
Fig.4 est une section transversale schématique suivant la ligne IV-IV de Fig.2 à plus grande échelle.
Fig.5 est une coupe longitudinale partielle à plus grande échelle de la paroi d'un segment tubulaire et de son revêtement.
Fig.6 est une coupe transversale partielle à plus grande échelle de la paroi d'un segment tubulaire, avant revêtement, avec des stries sur sa surface extérieure.
Fig.7 est une vue en perspective de l'extrémité d'un segment tubulaire d'électrode intérieure selon l'invention, et
Fig.8 est une vue de côté de l'extrémité d'un segment tubulaire à échelle différente de Fig.7

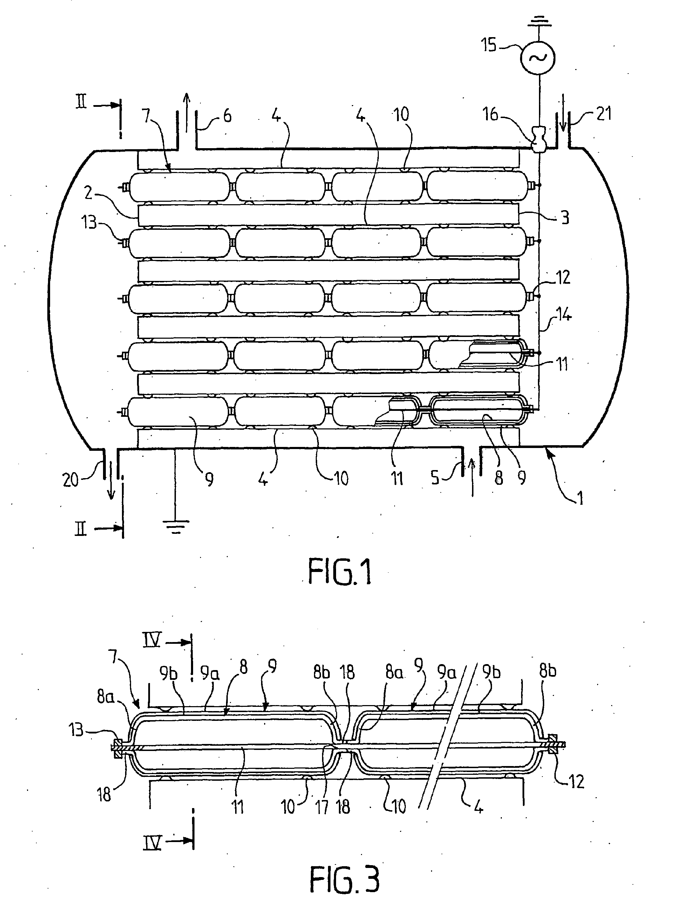

En se reportant à Fig.1 des dessins, on peut voir un générateur d'ozone disposé dans un réservoir 1 de forme générale cylindrique fermé à ses extrémités. Le réservoir 1 comporte au voisinage de chacune de ses extrémités longitudinales une paroi 2, 3 orthogonale à l'axe du réservoir. Chaque paroi comporte des trous en regard dans lesquels sont engagés des tubes 4 s'étendant d'une paroi 2 à l'autre paroi 3. La longueur des tubes 4 peut être de l'ordre de deux mètres ou plus. Les extrémités des tubes 4 sont soudées respectivement aux parois 2 et 3. Les tubes métalliques 4 constituent les électrodes extérieures connectées au potentiel de la terre. On peut considérer que l'ensemble des tubes 4 forment une seule électrode extérieure. Pour des raisons de clarté le nombre de tubes 4 représentés sur Fig.1 est limité, mais dans la pratique le nombre de tubes peut être supérieur à 100.

Les tubes 4 sont fixés de manière étanche à l'intérieur du réservoir et aux parois 2, 3, lesquelles sont également fixées de manière étanche, notamment par soudure, à la paroi cylindrique du réservoir 1. Un réfrigérant, par exemple de l'eau, est utilisé pour refroidir extérieurement les tubes 4. Le réfrigérant est introduit par une entrée 5 et évacué par une sortie 6.

Une électrode intérieure 7 est disposée dans chaque tube 4. Chaque électrode intérieure 7 est constituée d'une pluralité de segments tubulaires métalliques 8 fermés au moins partiellement à chaque extrémité et munis extérieurement d'un revêtement céramique 9. Les segments tubulaires 8 sont disposés les uns derrière les autres, en alignement ; ils sont mécaniquement désaccouplés et reliés électriquement par leurs extrémités en contact.

Des moyens de maintien 10 des segments tubulaires 8 par rapport à l'électrode extérieure 4 sont prévus pour former un interstice I de décharge annulaire entre la surface extérieure du revêtement céramique 9 et la surface intérieure de l'électrode extérieure 4. Les moyens 10 sont formés, par exemple, par des saillies isolantes fixées sur la paroi intérieure des tubes 4.

Une tige métallique 11 traverse axialement les segments tubulaires 8 et sort à chaque extrémité. Les zones extrêmes de la tige 11 sont filetées et munies d'un écrou de serrage 12,13 en appui contre le fond du dernier segment 8 voisin. Une extrémité de chaque tige 11, celle située sur la droite selon Fig.1, est reliée électriquement à un conducteur 14, lui-même relié à la borne haute tension d'une source de tension alternative 15. Un isolateur 16 entoure le conducteur 14 au niveau de sa traversée de la paroi du récipient 1.

Chaque segment tubulaire métallique 8 est muni, à chaque extrémité, d'un fond 8a, 8b convexe vers l'extérieur sensiblement en forme de calotte sphérique, notamment sensiblement hémisphérique. Le rayon de courbure du fond 8a, 8b peut être différent du rayon de la partie cylindrique du segment tubulaire 8.

La zone centrale du fond 8a, 8b comporte un orifice 17 pour le passage de la tige 11. Cet orifice 17 est délimité par une collerette cylindrique 18 tournée vers l'extérieur par rapport au fond 8a, 8b.

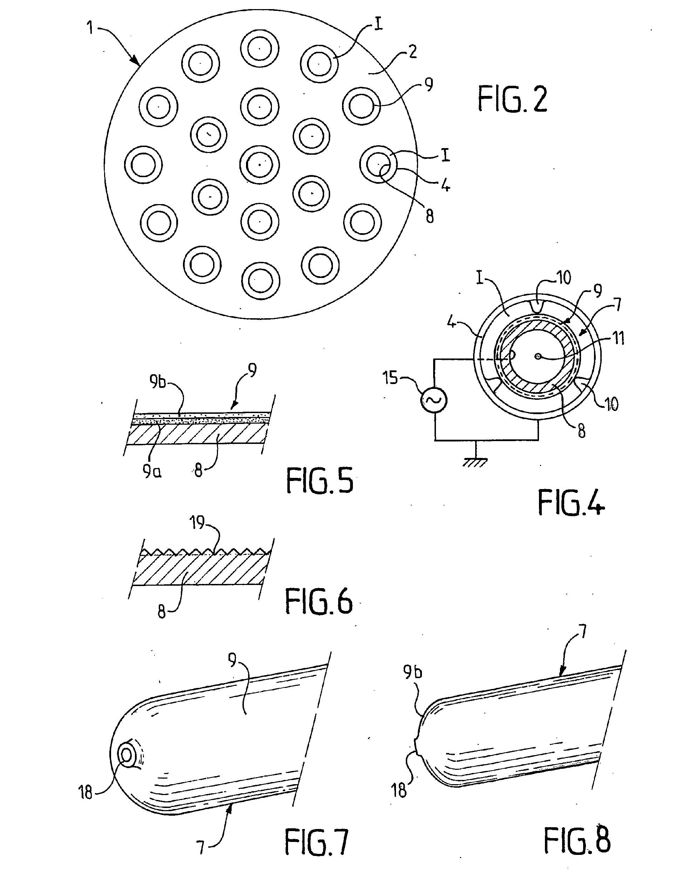

Le revêtement céramique 9, pour une épaisseur donnée, est composé d'au moins deux couches 9a, 9b (Fig.4) d'épaisseur réduite. La somme des épaisseurs des couches 9a, 9b correspond à l'épaisseur souhaitée. Les couches 9a, 9b sont déposées successivement sur le segment tubulaire 8. Le nombre de couches 9a, 9b peut être supérieur à deux, notamment égal à trois. L'épaisseur de chaque couche 9a, 9b est de préférence comprise entre 50 et 300 µm.

Le revêtement céramique 9 recouvre la partie cylindrique et les fonds convexes 8a, 8b du segment tubulaire mais l'extrémité axiale de la collerette 18 fait saillie par rapport au revêtement 9. Ainsi, les collerettes 18 de deux segments tubulaires 8 successifs peuvent venir en appui et établir le contact électrique lors du serrage axial exercé à l'aide de la tige 11 et des écrous 12, 13.

Avantageusement, la surface extérieure des segments tubulaires 8 présente une rugosité suffisante pour améliorer l'accrochage du revêtement céramique 9.

Selon une première possibilité, le segment tubulaire 8 comporte sur sa surface extérieure des stries 19 (Fig.6),par exemple annulaires de révolution autour de l'axe du segment, dont la profondeur est de l'ordre de 0.1 mm. En variante, la rugosité de la surface extérieure des segments 8 est obtenue par projection de sable sous pression d'air comprimé suffisante.

Le tube 4 et les segments tubulaires 8 sont de préférence réalisés en acier inoxydable, de même que les parois 2 et 3 et le réservoir 1.

Des moyens pour faire circuler dans le générateur un gaz contenant de l'oxygène, en particulier de l'air, comprennent une tubulure d'entrée 21 sur le réservoir débouchant dans l'espace compris entre la paroi 3 et le fond voisin du réservoir. Le gaz peut circuler dans les interstices I pour arriver dans une chambre limitée par la paroi 2 et l'autre fond du réservoir. Le gaz enrichi en ozone est évacué par une tubulure de sortie 20.

La céramique utilisée pour le revêtement 9 est choisie pour satisfaire aux exigences suivantes :
- forte adhérence à la surface du segment tubulaire 8 en acier ;
- résistance élevée aux contraintes mécaniques ;
- coefficient de dilatation thermique approprié ;
- résistance diélectrique élevée, supérieure à 10kV/mm ;
- capacité diélectrique pouvant être ajustée ;
- inertie vis-à-vis des oxydants.

Parmi ces exigences les deux premières sont les plus difficiles à satisfaire.

L'adhérence de la céramique peut être facilement testée avec un marteau utilisé pour frapper la surface de la céramique. La configuration d'écaillage ou des éclats qui en résulte doit ressembler à des trous en forme de cônes dont les sommets sont formés par des points d'acier de la paroi du segment tubulaire. Une configuration faisant apparaître de plus grandes zones de la paroi d'acier du segment tubulaire indique clairement une adhérence insuffisante de la céramique.

La rugosité de la surface du segment tubulaire 8, obtenue comme exposé précédemment, améliore considérablement l'accrochage du revêtement céramique.

La résistance mécanique du revêtement céramique peut être vérifiée lors de l'assemblage des segments tubulaires 8 dans un générateur. Pour cela, on exerce sur les écrous 12 ou 13 situés aux extrémités de la tige axiale 11 un couple de serrage supérieur au couple nominal. Par exemple le couple de serrage de l'essai est supérieur au double du couple nominal. Ainsi lorsque le couple de serrage des écrous 12, 13 est prévu pour être de l'ordre de 1 Nm, l'essai de résistance mécanique du revêtement céramique est effectué sous un couple de serrage d'environ 3 Nm. Selon l'invention, les segments tubulaires 8 à fonds convexes revêtus d'au moins deux couches 9a, 9b supportent un tel couple de serrage sans que des fissures apparaissent dans le revêtement céramique.

La surface convexe, sensiblement en forme de calotte sphérique, des extrémités 8a, 8b des segments tubulaires présente un rayon de courbure assurant une transition optimale pour le champ électrique. La forme arrondie des extrémités 8a, 8b permet d'éviter des angles trop vifs et des variations trop brutales du champ électrique entre l'électrode extérieure et l'électrode intérieure.

Un générateur conforme à l'invention résiste bien aux chocs de pression et/ou de tension et/ou de température. De tels chocs apparaissent, notamment, par suite d'instabilités dues à la décomposition de l'ozone lorsque sa teneur dépasse 12% en masse dans le gaz. Pour une telle teneur, lors d'une décomposition de l'ozone, des chocs de pression avec dégagement de chaleur ont lieu.

Le fonctionnement du générateur selon l'invention résulte immédiatement des explications précédentes.

L'air qui entre par la tubulaire 21 s'écoule dans les interstices I et est soumis à des décharges électriques du fait de la tension entre l'électrode intérieure 7, 8 et l'électrode extérieure 4. Il y a production d'ozone et l'air, enrichi en ozone, sort par la tubulure 20.

Un générateur conforme à l'invention a correctement fonctionné :
- sous une haute tension d'essai de 16kV au lieu des 10kV normalement prévus ;
- avec des charges allant jusqu'à 12kw/m² au lieu de 6kw/m², en fonctionnement normal, pour provoquer un défaut de l'isolation externe ;
- avec des couples mécaniques de serrage exercés sur les écrous 12 ou 13 allant jusqu'à 6Nm au lieu de 2Nm normalement prévu.

Malgré ces conditions extrêmes de fonctionnement, aucune fissure n'est apparue dans les revêtements céramiques des segments tubulaires 8.

## Revendications

1. Générateur d'ozone comportant :
- au moins une électrode extérieure tubulaire (4),
- au moins une électrode intérieure (7) constituée d'une pluralité de segments tubulaires métalliques (8) fermés, au moins partiellement, à chaque extrémité et revêtus extérieurement de céramique, ces segments tubulaires étant disposés les uns derrière les autres, mécaniquement découplés et reliés électriquement,
- des moyens de maintien (10) des segments tubulaires par rapport à l'électrode extérieure pour former un interstice (I) de décharge annulaire,
- une tige (11) traversant axialement les segments tubulaires (8) et munie à ses extrémités de moyens de serrage axial (12,13) des segments tubulaires les uns contre les autres, pour établir le contact électrique,
- des moyens (14) pour connecter toutes les électrodes à une source de courant alternatif, et
- des moyens (20,21) pour faire circuler un gaz contenant de l'oxygène dans les interstices,
**caractérisé en ce que** chaque segment tubulaire métallique (8) est muni, à chaque extrémité, d'un fond convexe vers l'extérieur (8a,8b), sensiblement en forme de calotte sphérique, comportant une zone centrale (18) pour contact électrique, et que le revêtement de céramique (9) comprend au moins deux couches (9a,9b) déposées successivement.

2. Générateur selon la revendication 1, **caractérisé en ce qu'**il est prévu pour résister, sans fissuration du revêtement céramique (9), à un couple de serrage au moins double du couple nominal, exercé en bout de tige axiale (11).

3. Générateur selon la revendication 1 ou 2, **caractérisé en ce que** l'épaisseur de chaque couche (9a, 9b) de céramique est comprise entre 50 et 300 µm.

4. Générateur selon l'une des revendications 1 à 3, **caractérisé en ce que** chaque couche (9a, 9b) du revêtement céramique est déposée par revêtement de pâte (« slurry coating »), ou revêtement de poudre (« powder coating »)ou pulvérisation plasma (« plasma spraying »).

5. Générateur selon l'une des revendications précédentes, **caractérisé en ce que** la surface extérieure des segments tubulaires (8) présente une rugosité pour améliorer l'accrochage du revêtement céramique.

6. Générateur selon la revendication 5, **caractérisé en ce que** la surface extérieure des segments tubulaires (8) présente des stries (19).

7. Générateur selon la revendication 6, **caractérisé en ce que** la profondeur des stries (9) est de l'ordre de 0.1mm.

8. Générateur selon la revendication 5, **caractérisé en ce que** la surface extérieure des segments tubulaires (8) est rendue rugueuse par projection de sable.

9. Générateur selon l'une quelconque des revendications précédentes, **caractérisé en ce que** la zone centrale de chaque fond d'un élément tubulaire comporte un orifice (17) délimité par une collerette cylindrique (18) faisant saillie axialement vers l'extérieur, au-delà du revêtement céramique (9), par rapport au fond.

10. Générateur selon l'une quelconque des revendications précédentes, **caractérisé en ce que** les électrodes extérieures (4) et intérieures (7) et les segments tubulaires (8) sont réalisés en acier inoxydable.

11. Générateur selon l'une quelconque des revendications précédentes, **caractérisé en ce que** le rayon de courbure du fond (8a, 8b) du segment tubulaire (8) est sensiblement égal au rayon de la partie cylindrique du segment tubulaire (8).

12. Electrode intérieure pour générateur d'ozone selon l'une quelconque des revendications précédentes, constituée d'une pluralité de segments tubulaires métalliques (8) fermés, au moins partiellement, à chaque extrémité et revêtus extérieurement de céramique, ces segments tubulaires étant disposés les uns derrière les autres, mécaniquement découplés et reliés électriquement, une tige (11) traversant axialement les segments tubulaires et étant munie à ses extrémités de moyens de serrage axial (12,13) des segments tubulaires les uns contre les autres, pour établir le contact électrique, **caractérisée en ce que** chaque segment tubulaire métallique (8) est muni, à chaque extrémité, d'un fond (8a,8b) convexe vers l'extérieur, sensiblement en forme de calotte sphérique, comportant une zone centrale pour contact électrique, et que le revêtement de céramique (9) comprend au moins deux couches (9a, 9b) déposées successivement.

## Claims

1. Ozone generator comprising:
- at least one tubular external electrode (4),
- at least one internal electrode (7) consisting of a plurality of tubular metal segments (8) at least partially closed at each end and coated externally with ceramic, these tubular segments being disposed one behind the other, mechanically decoupled and electrically connected,
- means (10) of holding the tubular segments with respect to the external electrode in order to form an annular discharge gap (I),
- a rod (11) passing axially through the tubular segments (8) and provided at its ends with means (12, 13) of axially clamping the tubular segments against one another, in order to establish electrical contact,
- means (14) for connecting all the electrodes to an alternating current source, and
- means (20, 21) for circulating a gas containing oxygen in the gaps,
**characterised in that** each tubular metal segment (8) is provided, at each end, with an outwardly convex bottom (8a, 8b), substantially in the form of a spherical cap, comprising a central zone (18) for electrical contact, and **in that** the ceramic coating (9) comprises at least two layers (9a, 9b) deposited successively.

2. Generator according to claim 1, **characterised in that** it is designed to resist, without cracking of the ceramic coating (9), a torque at least double the nominal torque, exerted at the end of the axial rod (11).

3. Generator according to claim 1 or 2, **characterised in that** the thickness of each layer (9a, 9b) of ceramic is between 50 and 300 µm.

4. Generator according to one of claims 1 to 3, **characterised in that** each layer (9a, 9b) of the ceramic coating is deposited by slurry coating or powder coating or plasma spraying.

5. Generator according to one of the preceding claims, **characterised in that** the external surface of the tubular segments (8) has roughness in order to improve the attachment of the ceramic coating.

6. Generator according to claim 5, **characterised in that** the external surface of the tubular segments (8) has serrations (19).

7. Generator according to claim 6, **characterised in that** the depth of the serrations is around 0.1 mm.

8. Generator according to claim 5, **characterised in that** the external surface of the tubular segments (8) is made rough by sandblasting.

9. Generator according to any one of the preceding claims, **characterised in that** the central zone of each bottom of a tubular element comprises a orifice (17) delimited by a cylindrical collar (18) projecting axially outwards, beyond the ceramic coating (9), with respect to the bottom.

10. Generator according to any one of the preceding claims, **characterised in that** the external (4) and internal (7) electrodes and the tubular segments (8) are produced from stainless steel.

11. Generator according to any one of the preceding claims, **characterised in that** the radius of curvature of the bottom (8a, 8b) of the tubular segment (8) is substantially equal to the radius of the cylindrical part of the tubular segment (8).

12. Internal electrode for an ozone generator according to any one of the preceding claims, consisting of a plurality of tubular metal segments (8) at least partially closed at each end and coated externally with ceramic, these tubular segments being disposed one behind the other, mechanically decoupled and electrically connected, a rod (11) passing axially through the tubular segments and being provided at its ends with means (12, 13) of axial clamping of the tubular segments against one another, in order to establish electrical contact, **characterised in that** each tubular metal segment (8) is provided, at each end, with an outwardly convex bottom (8a, 8b) substantially in the form of a spherical cap, comprising a central zone for electrical contact, and **in that** the ceramic coating (9) comprises at least two layers (9a, 9b) deposited successively.

## Patentansprüche

1. Ozongenerator umfassend:
- mindestens eine rohrförmige Außenelektrode (4),
- mindestens eine Innenelektrode (7) bestehend aus mehreren zumindest teilweise endseitig geschlossenen und äußerlich mit Keramik verkleideten, metallenen rohrförmigen Segmenten (8), welche hintereinander angeordnet, mechanisch entkoppelt und elektrisch verbunden sind,
- Haltemittel (10) zur Halterung der rohrförmigen Segmente im Verhältnis zur Außenelektrode zur Bildung eines Zwischenraums (I) zur Ringentladung,
- einen Stab (11), der axial durch die rohrförmigen Segmente (8) ragt und an seinen Enden mit axialen Spannmitteln (12, 13) zum Verspannen der rohrförmigen Segmente gegeneinander, um den Stromkontakt herzustellen, versehen ist,
- Mittel (14) zum Anschließen sämtlicher Elektroden an eine Wechselstromquelle, und
- Mittel (20, 21) zur Förderung eines sauerstoffhaltigen Gases in den Zwischenräumen,
**dadurch gekennzeichnet, dass** jedes metallene rohrförmige Segment (8) an jedem Ende mit einem nach außen gewölbten, im Wesentlichen die Form einer kugelförmigen Kalotte aufweisenden Boden (8a, 8b) versehen ist, der einen mittleren Bereich (18) für den elektrischen Kontakt aufweist, und dass der Keramiküberzug (9) mindestens zwei nacheinander aufgetragene Schichten (9a, 9b) umfasst.

2. Generator nach Anspruch 1, **dadurch gekennzeichnet, dass** vorgesehen ist, dass er ohne Rissbildung im Keramiküberzug (9) einem am Ende des axialen Stabs (11) ausgeübten Anzugsdrehmoment standhalten kann, der mindestens zweimal dem Nenndrehmoment entspricht.

3. Generator nach Anspruch 1 oder 2, **dadurch gekennzeichnet, dass** die Dicke einer jeden Keramikschicht (9a, 9b) zwischen 50 und 300 µm beträgt.

4. Generator nach einem der Ansprüche 1 bis 3, **dadurch gekennzeichnet, dass** jede Schicht (9a, 9b) des Keramiküberzugs als Schlickerschicht ("slurry coating") oder als Pulverschicht ("powder coating") oder durch Plasmasprühen ("plasma spraying") aufgetragen wird.

5. Generator nach einem der vorstehenden Ansprüche, **dadurch gekennzeichnet, dass** die Außenfläche der rohrförmigen Segmente (8) eine Rauhigkeit aufweist, um das Anhaften des Keramiküberzugs zu verbessern.

6. Generator nach Anspruch 5, **dadurch gekennzeichnet, dass** die Außenfläche der rohrförmigen Segmente (8) Rillen (19) aufweist.

7. Generator nach Anspruch 6, **dadurch gekennzeichnet, dass** die Tiefe der Rillen (19) etwa 0,1 mm beträgt.

8. Generator nach Anspruch 5, **dadurch gekennzeichnet, dass** die Außenfläche der rohrförmigen Segmente (8) durch Sandstrahlen aufgeraut wird.

9. Generator nach einem der vorstehenden Ansprüche, **dadurch gekennzeichnet, dass** der mittlere Bereich eines jeweiligen Bodens eines rohrförmigen Elements eine Öffnung (17) aufweist, die durch einen zylindrischen Bund (18) begrenzt wird, der im Verhältnis zum Boden axial nach außen über den Keramiküberzug (9) hinaus ragt.

10. Generator nach einem der vorstehenden Ansprüche, **dadurch gekennzeichnet, dass** die Außenelektroden (4) und die Innenelektroden (7) und die rohrförmigen Segmente (8) aus Edelstahl hergestellt sind.

11. Generator nach einem der vorstehenden Ansprüche, **dadurch gekennzeichnet, dass** der Biegeradius des Bodens (8a, 8b) des rohrförmigen Segments (8) im Wesentlichen dem Radius des zylindrischen Teils des rohrförmigen Segments (8) entspricht.

12. Innenelektrode für Ozongenerator nach einem der vorstehenden Ansprüche, bestehend aus mehreren zumindest teilweise endseitig geschlossenen und äußerlich mit Keramik verkleideten, metallenen rohrförmigen Segmenten (8), welche hintereinander angeordnet, mechanisch entkoppelt und elektrisch verbunden sind, wobei ein Stab (11) axial durch die rohrförmigen Segmente ragt und an seinen Enden mit axialen Spannmitteln (12, 13) zum Verspannen der rohrförmigen Segmente gegeneinander versehen ist, um den Stromkontakt herzustellen, **dadurch gekennzeichnet, dass** jedes metallene rohrförmige Segment (8) an jedem Ende mit einem nach außen gewölbten, im Wesentlichen die Form einer kugelförmigen Kalotte aufweisenden Boden (8a, 8b) versehen ist, der einen mittleren Bereich für den elektrischen Kontakt aufweist, und dass der Keramiküberzug (9) mindestens zwei nacheinander aufgetragene Schichten (9a, 9b) umfasst.
